Europäisches Patentamt

European Patent Office

Office européen des brevets

(11) Publication number: **0 281 762 B1**

# EUROPEAN PATENT SPECIFICATION

(45) Date of publication of patent specification: **17.06.92**

(21) Application number: **88101622.4**

(22) Date of filing: **04.02.88**

(51) Int. Cl.⁵: **F24F 3/08**, F24F 11/06, F24F 5/00, F24D 11/02, F16K 31/06

(54) **Air conditioning system for buildings.**

(30) Priority: **12.03.87 JP 57080/87**
**20.10.87 JP 265909/87**
**31.10.87 JP 276568/87**

(43) Date of publication of application:
**14.09.88 Bulletin 88/37**

(45) Publication of the grant of the patent:
**17.06.92 Bulletin 92/25**

(84) Designated Contracting States:
**BE DE ES FR GB NL**

(56) References cited:
**EP-A- 0 266 680**
**DE-A- 2 403 059**
**US-A- 3 127 929**
**US-A- 4 237 859**

(73) Proprietor: **TAKENAKA KOMUTEN CO. LTD.**
**27, 4-chome, Honmachi Higashi-ku**
**Osaka-shi Osaka 541(JP)**

Proprietor: **Sinko Kogyo Co., Ltd.**
**Nittochi Yodoyabashi Building 1, Okawa-cho Higashi-ku**
**Osaka-shi Osaka(JP)**

(72) Inventor: **Yamada, Tetsuo c/o Takenaka Komuten Co.,Ltd.**
**27, Hon-machi 4-chome Higashi-ku Osaka-shi Osaka(JP)**
Inventor: **Inoue, Yoshinori c/o Takenaka Komuten Co.,Ltd.**
**27, Hon-machi 4-chome Higashi-ku Osaka-shi Osaka(JP)**
Inventor: **Miura, Sinji c/o Takenaka Komuten Co., Ltd.**
**27, Hon-machi 4-chome Higashi-ku Osaka-shi Osaka(JP)**
Inventor: **Endo, Masao c/o Takenaka Komuten Co.,Ltd.**
**27, Hon-machi 4-chome Higashi-ku Osaka-shi Osaka(JP)**
Inventor: **Fukunaga, Tadahiro c/o Takenaka Komuten Co.,Ltd.**
**27, Hon-machi 4-chome Higashi-ku Osaka-shi Osaka(JP)**

Inventor: **Yoshida, Yashutoshi c/o Sinko Kogyo Co., Ltd.**
**Nittochi Yodoyabashi Building 1 Okawa-cho Higashi-ku Osaka-shi Osaka(JP)**
Inventor: **Kaneda, Setsuo c/o Sinko Kogyo Co., Ltd.**
**Nittochi Yodoyabashi Building 1 Okawa-cho Higashi-ku Osaka-shi Osaka(JP)**

(74) Representative: **Glawe, Delfs, Moll & Partner Patentanwälte**
**Postfach 26 01 62 Liebherrstrasse 20**
**W-8000 München 26(DE)**

## Description

### BACKGROUND OF THE INVENTION

#### 1. Field of the invention

The present invention generally relates to an air conditioning system for buildings and more particularly, to an air conditioning system of a type in which the thermal conveyance is conducted through the heat pipes of a gravity type.

#### 2. Description of the prior art

Generally, in an air conditioning system for a building water has been in use as a thermal medium for thermal conveyance between the thermal source equipment and the individual air conditioners. Such use of water, however, has involved a problem relating to troubles of water leakage once an air conditioner gives way to such a disorder. Recently, therefore, for air conditioning system for buildings, introduction of a volatile substance, such as freon, as a thermal medium to be passed directly between the thermal source equipment and the respective heat exchangers of the air conditioners is coming into consideration so as to reduce troubles of liquid leakage by virtue of the volatility of the substance. Such an air conditioning system for buildings is known for example from US-A-4 237 859.

The inventors has provided such a type of air conditioning system which utilizes the heat pipe of a gravity type (refer to EP-A-0 266 680 published on 11/05/88 as a prior art document under Article 54 (3) EPC). This air conditioning system includes a first thermal storage tank as a cold thermal reservoir which is installed at a high place, such as the roof, in an air-conditioned building; a second thermal storage tank as a hot thermal reservoir which is installed at a low place, such as the basement, in the same building; a plurality of air conditioners each of which is installed in an air-conditioned room or at a place close to it at a height such as the floors, between the first thermal storage tank as a cold thermal reservoir and the second thermal storage tank as a hot thermal source; and heat pipe of a gravity which connect the air conditioner with the first heat storage tank and with the second heat storage thank. The heat pipe of a gravity type is essentially designed to allow thermal medium to circulate therethrough under a natural pressure for circulation generated by phase change of the thermal medium.

In the air conditioning system as described above the flow of the circulating thermal medium is adjusted to control the warming and cooling conditions in accordance with the heat load in the respective air-conditioned rooms. It is to be noted, however, there are some problems in controlling the flow of the thermal medium. For example, in the air conditioners installed on the different floors the water head of the thermal medium in liquid phase is different between the respective air conditioners, resulting in that the equal heat exchange condition can not be obtained in the respective air conditioners. More specifically, since the air conditioner arranged at a lower floor receives a higher water head, the flow control by the throttle valve or the like is very difficult. When the throttle valve is overly throttled, the thermal medium becomes in short supply to the air conditioner. On the contrary to the above, if the heat pipe for vapor at this air conditioner is filled by the liquid of thermal medium, the smooth flow of the vaporized thermal medium is hampered so that the heat exchange at the air conditioner can not be effected efficiently, resulting in a poor cooling. In addition, in the state in which higher water head is caused, the temperature of the thermal medium in vapor phase becomes higher so that the sufficient cooling can not be obtained.

Moreover, when the heat load at the different air-conditioned rooms are different from each other, the warming and cooling operations at their rooms must be separately adjusted in accordance with their specific heat load and accordingly, when, for instance, the air conditioning system is operated in the cooling mode, in the air conditioner being subject to larger heat load, the amount of exchanged heat and accordingly the amount of vapor of the thermal medium become larger so that the resistance in the heat pipe for vapor becomes larger, that is, since the line or the air conditioners requiring larger flow of thermal medium is subject to larger resistance, a great quantity of thermal medium is, disadvantageously, supplied to the other line or air conditioners which is not subject to large heat load and accordingly is not need large quantity of thermal medium.

### SUMMARY OF THE INVENTION

Accordingly, an essential object of the present invention is to provide an air-conditioning system for buildings including a plurality of air conditioners installed, respectively, on the different floors and the heat pipes of a gravity type for effecting the thermal conveyance, which can control the respective air conditioners on the different floors with high accuracy to condition the temperature of the air in the respective airconditioned locations as desired.

In accomplishing this and other objects, there is provided an air conditioning system for buildings which comprises:

a cold thermal source which is installed at a high place in the building,

a hot thermal source which is installed at a low place in the building,

air conditioners which are installed at various heights between said cold and hot thermal sources and each of which has, respectively, a condenser as a heat exchanger for warming air in air-conditioned location, a vaporizer as a heat exchanger for cooling the air in the air-conditioned location and a fan for blowing air into the air-conditioned location through said condenser and vaporizer,

a cooling heat pipe of a gravity type by which the vaporizers of the air conditioners are connected with the cold thermal source, and in which thermal medium is filled so as to circulate therein,

a warming heat pipe of a gravity type by which the condensers of the air conditioners are connected with the hot thermal source and in which thermal medium is filled so as to circulate therein,

temperature sensors for detecting temperature of the air in the air-conditioned locations,

flow control valves which are respectively incorporated in the heat pipes at inlets of the vaporizers and at outlets of the condensers,

liquid level detection means for detecting a predetermined level of the thermal medium in liquid phase in the vaporizer, and

controllers which control, respectively, the flow control valves based on detection signals supplied from the temperature sensors and the liquid level detection means so that the air in the air-conditioned locations meet a set point.

With the above air conditioning system, the warming operation is effected by the first natural circulation line including the hot thermal source, air conditioners and the warming heat pipe, while the cooling operation is effected by the second natural circulation line including the cold thermal source, air conditioners and the cooling heat pipe. The flow of the thermal medium being supplied into the condensers and vaporizers is controlled by the corresponding flow control valves. The valves are controlled so as to accomplish the desired temperature of the returning air returning to the respective air conditioners. For example, when the temperature of the returning air is higher than the set point, the flow control valve corresponding to the vaporizer is opened or its opening is increased, while the other flow control valve corresponding to the condenser is closed. On the contrary to the above, when the temperature of the returning air is lower than the set point, the flow control valve corresponding to the condenser is opened or its opening is increased, while the other flow control valve corresponding to the vaporizer is closed. As described above, since the flow control valves , accordingly the flow of the thermal medium to be supplied, are controlled in accordance with the heat load in the respective air conditioners, is prevented such problem in the prior art that the required quantity of thermal medium can not be sufficiently supplied into the corresponding air conditioners, while the thermal medium exceeding the desired quantity is supplied into the corresponding air conditioners. It is to be noted that the flow control valve can be controlled in ON-OFF control or in continuous or step control. Furthermore, the flow control valve corresponding the vaporize is also controlled such that the liquid level of the thermal medium does not exceed the predetermined value. Namely, when the valve is opened and the thermal medium in liquid phase passes through the valve into the vaporizer and reaches the predetermined level, the liquid level detection means detects its condition and generate a detection signal for closing the valve. Accordingly, the supply of the thermal medium to the vaporizer is controlled based on the difference of temperature between the returning air and the set point and the detection signal from the liquid level detection means.

## BRIEF DESCRIPTION OF THE DRAWINGS

This and other objects and feature of the present invention will become apparent from the following description taken in conjunction with the preferred embodiment thereof with reference to the accompanying drawings, in which:

Fig. 1 is a schematic flowchart of an air conditioning system for a building according to an embodiment of the present invention,

Fig. 2 is a diagram showing the operations of the flow control valves and the fan with respect to the temperature of the returning air returning to the air conditioners,

Fig. 3 is a diagram showing an operation of the first vaporizer and first condenser with respect to the temperature of the returning air,

Fig. 4 is an enlarged view showing an essential part of the air conditioner,

Fig. 5 is an enlarged view showing a modification of the air conditioner as shown in Fig. 4

Fig. 6 is a schematic flowchart showing a second embodiment of the present invention,

Fig. 7 is a section showing an embodiment of the flow control valve employed in the air control system as shown in Fig. 1,and

Fig. 8 is a section taken along a line VIII-VIII in Fig. 7.

## DETAILED DESCRIPTION OF THE INVENTION

Before the description of the present invention proceeds, it is to be noted that like parts are designated by like reference numerals and symbols throughout the several views of the accompanying drawings.

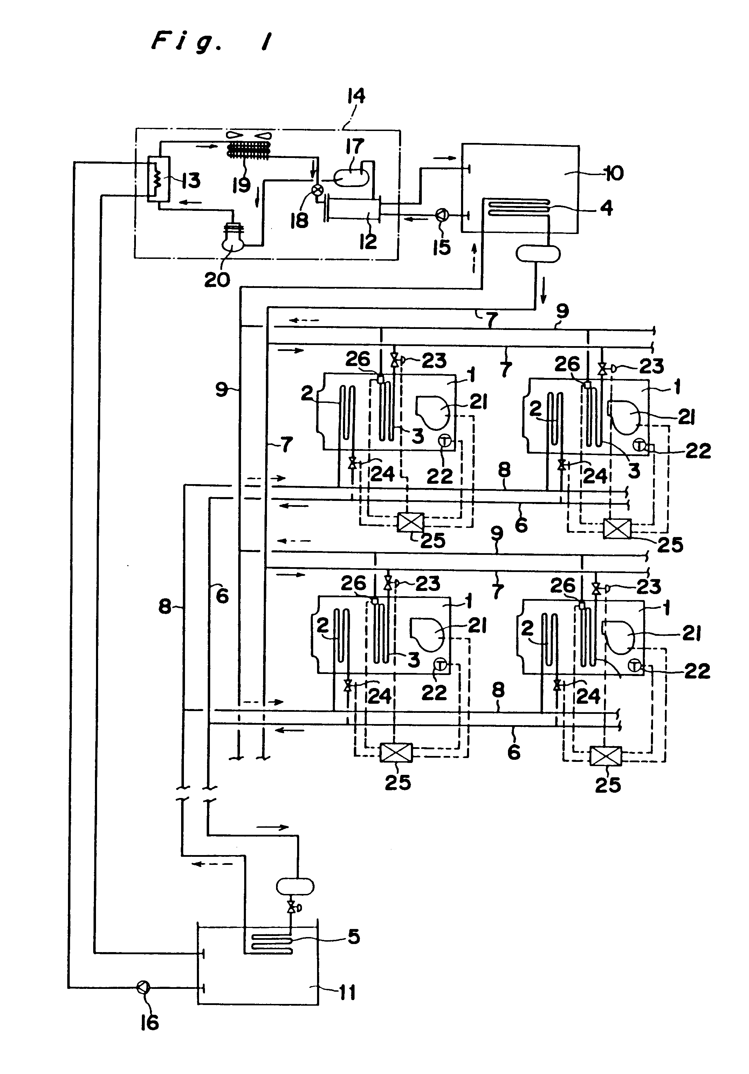

Referring now to the drawings, there is shown in Fig. 1 an air conditioning system for a building in a schematic flowchart according to the present invention. The installations in this system are positioned according to a specification with respect to height. The air conditioners 1 are installed at the air-conditioned rooms on the different floors of the building. The air conditioner 1 includes a first condenser 2 as a heat exchanger for warming the air in the air-conditioned room and a first vaporizer 3 as a heat exchanger for cooling the air in the air-conditioned room. A second vaporizer 5, forming a thermal medium circulation line for warming together with the first condenser 2, is installed on a position lower than any of the locations where the air conditioners 1 are installed. A second condenser 4, forming a thermal medium circulation line for cooling together with the first vaporizer 3, is installed on a position higher than any of the locations where the air conditioners 1 are installed. In each thermal medium circulation line, the vaporizer and condenser are connected to each other through the corresponding heat pipes 6, 8 and 7, 9. The second condenser 4 is incorporated in a cold thermal source, wherefore an ice type thermal reservoir 10 is used, which is installed at a high place, such as a roof, whereas the second vaporizer 5 is incorporated in a hot thermal source, wherefore a hot water type thermal reservoir 11 is used, which is installed at a lower place, such as a basement of a building. The thermal source device to provide the thermal reservoirs 10 and 11 with cold energy or hot energy is a heat pump chiller 14 with an ice-making device 12 and hot water making device 13. A slurry pump 15 is provided between the ice type thermal reservoir 10 and the ice making device 12 so that ice made by the ice-making device 12 is forced into the ice type thermal reservoir 10 by the slurry pump 15. A hot water heat recovery pump 16 is provided between the hot water type thermal reservoir 11 and the hot water making device 13 to forces hot water into the thermal reservoir 11. In the drawings, 17 denotes an accumulator, 18 an expansion valve, 19 an air-heat exchanger and 20 a compressor.

The air conditioner 1, essentially, includes, other than the above described first condenser 2 and first vaporizer 3, a fan 21 and a thermistor 22 for detecting the temperature of the returning air in the air-conditioned room which is to be sucked by the fan 21. Flow control valves 23 and 24 are incorporated in the inlet of the first vaporizer 3 and the outlet of the first condenser 2. A liquid level detector 26 is mounted on a upper position of the first vaporizer 3. The detection signals from the thermistor 22 and the liquid level detector 26 are supplied into a controller 25. The controller 25 carries out the calculation based on the above signals to obtain the suitable opening of the flow control valves 23 and 24 and the suitable revolution of the fan 21, the command signals corresponding to which are generated and output into the flow control valves 23 and 24 and the fan 21.

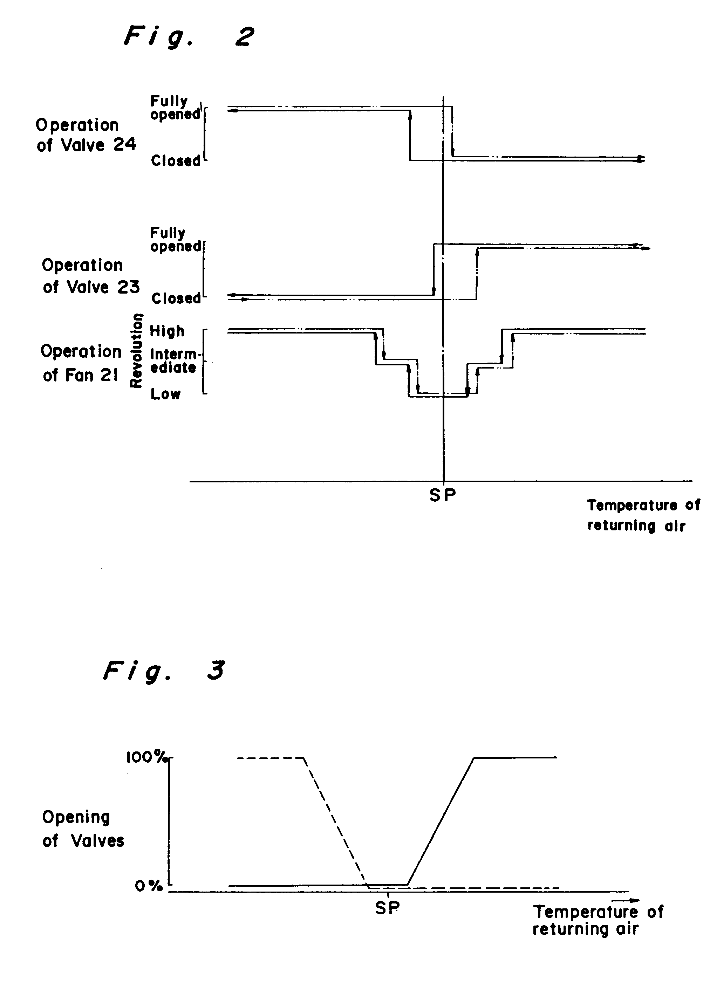

Fig. 2 diagrammatically shows a control of the opening of the valves 24 and 23 corresponding to the first condenser 2 and the first vaporizer 3 and revolution of the fan 21 with respect to the temperature of the returning air in the air-conditioned room. In Fig. 2 the operation of the valve 24 corresponding to the first condenser 2 is illustrated on the uppermost stage, the operation of the valve 23 corresponding to the first vaporizer 3 is illustrated on the middle stage, and the operation of the fan 21 is illustrated on the lowermost stage. In this embodiment, the desired value of the temperature in the air-conditioned room is set at a set point SP. When the temperature of the returning air has lowered under the set point SP, the warming operation is started, while when the temperature of the returning air has risen above the set point SP, the cooling operation is started.

In this embodiment, the flow control valves 23 and 24 respectively consist of the 0N-0FF type valves. When the temperature of the returning air is above the set point SP, the valve 24 corresponding to the first condenser 2 is closed and the valve 23 corresponding to the first vaporizer 3 is opened for cooling operation. On the contrary, the temperature of the returning air is below the set point SP, the valve 24 is opened and valve 23 is closed for the warming operation. That is, the cooling and warming operations are mutually switched around the set point SP. In this switching operation, the difference between the temperature, on which the respective valve 23 or 24 are opened, and the set point SP is larger than the difference between the temperature, on which the respective valve 23 or 24 are closed, and the set point SP. Namely, when the operation is switched from the cooling to the warming, as shown by the solid line in Fig. 2, the valve 23 is closed at a point slightly below the set point SP and subsequently the valve 24 is opened at a point further below the set point SP. On the contrary, when the operation is switched from the warming to the cooling, as shown by the two-dot chain line in Fig. 2, the valve 24 is closed at a point slightly above the set point SP and subsequently the valve 23 is opened at a point further above the set point SP. It is to be noted, here, that even if the temperature of the returning air is not sufficiently lowered to stop the cooling operation, in the case where the thermal medium is sufficiently filled in the first vaporizer 3, the liquid level detector 26 generates a detection signal to close the valve 23.

The fan 21 is controlled so as to rotate at three stages of speed, i.e. high, intermediate and low speeds. The more remote from the set point SP, the temperature of the returning air is, in both cooling and warming operations, the faster the fan 21 rotates. The solid line illustrates the switching operation from cooling to warming, while the two-dot chain line illustrates the switching operation from warming to cooling. The switching points where the revolution of the fan is switched from higher speed to lower speed, is closer to the set point SP than the switching points where the revolution of the fan is switched from lower speed to higher speed is. In addition, the fan 21 is so controlled that when the valve 24 corresponding to the first condenser 2 and the valve 23 corresponding to the first vaporizer 3 are respectively opened, the revolution of the fan 21 is, substantially the same time, switched from low speed to intermediate speed.

Alternatively, as shown in Fig. 3, it is possible that the revolution of the fan 21 is maintained constant and only the opening of the valves 23 and 24 are controlled so as to proportionally increase in accordance with the divergence of the temperature of the returning air with respect to the set point SP. It is to be noted that in Fig. 3, the solid line illustrates the operation of the valve 23, while the broken line illustrates the operation of the valve 24.

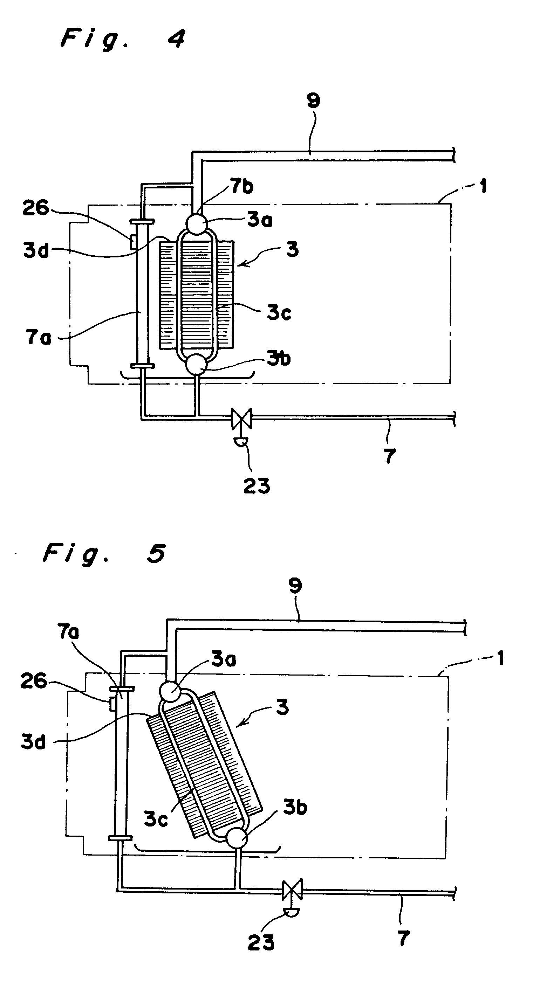

Fig. 4 is an enlarged view of the air conditioner 1 showing the configuration of the first vaporizer 3 and the liquid level detection means in detail, the first condenser, fan and thermistor being omitted. The first vaporizer 3 comprises a lower header 3b which is connected with the heat pipe 7 for thermal medium in liquid phase, the flow control valve 23 being incorporated in the heat pipe at a position adjacent to the lower header 3b, a coil 3c connected with the lower header 3b and constituting the essential portion of heat exchanger, and a upper header 3a which is connected with both the coil 3c and the heat pipe 9 for thermal medium in vapor phase. The liquid level detection means comprises a bypass 7a, which is connected with both the heat pipes 7 and 9, and a liquid level detection switch 26 which is mounted on the bypass 7a at a predetermined height to detect the liquid level of thermal medium in the bypass 7a and accordingly in the coil 3c. When the switch 26 detects the status in which the thermal medium in liquid phase reaches the predetermined level, the switch 26 generates a detection signal and supply it to the controller 25 to close the valve 23.

The flow control valve 22 consist of, as one embodiment, an electromagnetic valve which is of a type of the switch 26 is mounted on the bypass 7a at such height that it detects such a condition in which the thermal medium in liquid phase reaches substantially over the uppermost fin 3d. It is to be noted, here, that, in order to obtain the effective performance of cooling, it is importance that the coil 3c, should be filled by the thermal medium in liquid phase up to the level corresponding to the uppermost fin. Furthermore, it is, also, importance that the inlets 7b of the heat pipe 9 for vapor, which are opened to the interior of the upper header 3a, should not be occupied by the thermal medium in liquid phase, in other words, at least the upper portion of the header 7b should be occupied by the vapor. If the inlets 7b are occupied by the thermal medium in liquid phase, the vapor, which has been vaporized in the coil 3a and the upper header 3a, can not flow quickly into the heat pipe 9.

The valve 23 is closed when the air conditioner 1 is not operated. The valve 23 is also closed when the temperature detected by the thermistor 22 is below the set point SP even if the liquid level of the thermal medium is below the predetermined level which is should be detected by the switch 26.

Alternatively, the first vaporizer 3 may be mounted in the housing of the air conditioner 1 along a inclined plane, as shown in Fig. 5.

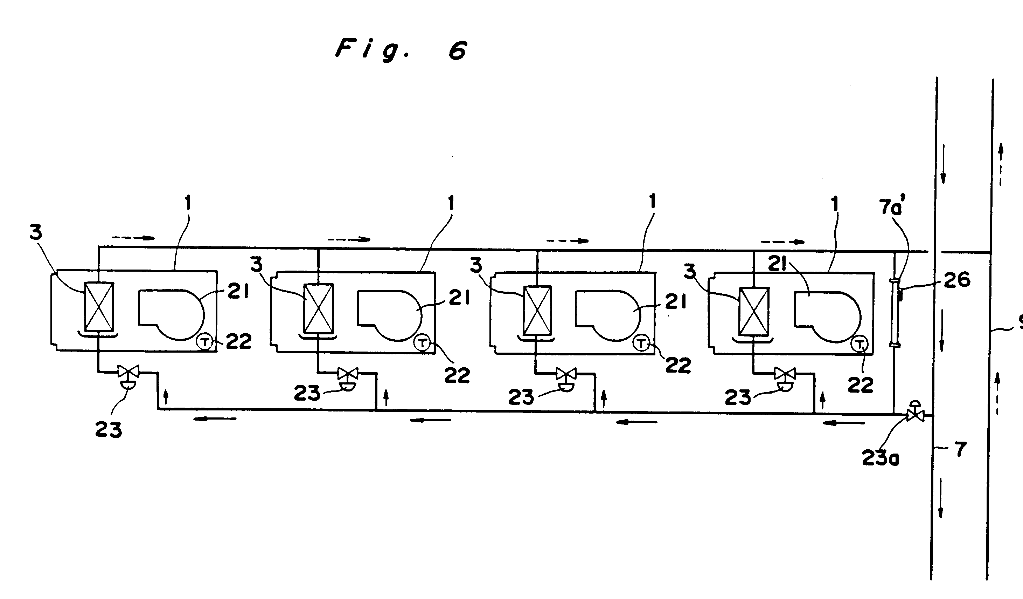

In the embodiment as shown in Fig. 1, each air conditioner 1 is provided with a liquid level detection means. On the contrary to the above, as shown in Fig. 6, wherein the first condenser 2 is omitted, a group of air conditioners on the same floor of a building can be controlled by a single liquid level detection means if all of the air conditioners can be operated in the same mode. In this embodiment, a common bypass 7a' are connected with both the heat pipes 7 and 9. An additional ON-OFF type flow control valve 23a for supplying the thermal medium in liquid to every air conditioners is incorporated in the suitable portion of the heat pipe 7. The signals generated in the liquid level detection switch 26 and the respective thermistors 22 are supplied into the controller, not shown in Fig. 6, by which the valves 22 and 23 are controlled. In this embodiment, the liquid level of the thermal medium in the respective vaporizers 3 are represented by the liquid level of the thermal medium in the bypass 7a'. Accordingly, the liquid level of the thermal medium in the respective vaporizers 3 are basically controlled by the signal from the switch 26.

In the embodiments as described above, the liquid level detection switch 26 is employed to detect the liquid level of the thermal medium in the first vaporizer 3. On the contrary to the above, it is possible to detect the liquid level of the thermal medium in the vaporizer 3 by such system that comprises a pair of temperature sensors (not shown) respectively incorporated in the inlet and outlet of the vaporizer 3 for thermal medium. In detail, if the thermal medium in liquid phase does not reach the predetermined level, i.e. the outlet of the vaporizer 3, the temperature of the vapor, which is overheated and passes through the outlet, is higher than that of the thermal medium in liquid phase which is detected by the lower sensor mounted on the inlet of the vaporizer 3. On the contrary to the above, when the thermal medium in liquid phase reaches the predetermined level of the inlet in the vaporizer 3 so that the upper sensor detects the temperature of the thermal medium in liquid phase which is the same as that of thermal medium to be detected by the lower sensor. Accordingly, by comparing, with each other the both temperatures detected by the upper and lower sensors, liquid level detection can be carried out.

With the system as described above, since the opening of the valves 23 and 24 are, respectively, controlled based on the differences between the actual temperature of the returning air and the set point, that is, since the flow of the thermal medium is controlled in such a manner that the resistance to the flow of the thermal medium varies depending to the opening of the valves 23 and 24 instead of depending to the amount of heat exchange, i.e. amount of vapor, necessary flow of thermal medium can be supplied to the air conditioners which requires the supply of the thermal medium. Furthermore, even if a plurality of air conditioners are respectively installed at different height, i.e. on different floors of a building, the liquid level of thermal medium in the first vaporizer 3 is controlled by the liquid level detection means and the flow control valve 23 so as to be maintained constant, the water head of the thermal medium in the respective air conditioners is maintained constant. Therefore, in the respective air conditioners on the different floors of the building the thermal medium in liquid phase in the corresponding vaporizers can be vaporized at substantially the same temperature under substantially the same pressure, resulting in the same cooling performance.

In addition, with the above system, it is possible to effect the dehumidifying operation in such a manner that the supercooling dehumidification is carried out by the first vaporizer 3 and the reheat is carried out by the first condenser 2. In this case, both the valves 23 and 24 are opened.

Alternatively, in Fig. 1, when the water head of the thermal medium at the lower air conditioners is extremely high, it is preferable to incorporate a pressure reducing valve in each branch heat pipe for liquid at the upstream of the valve 23.

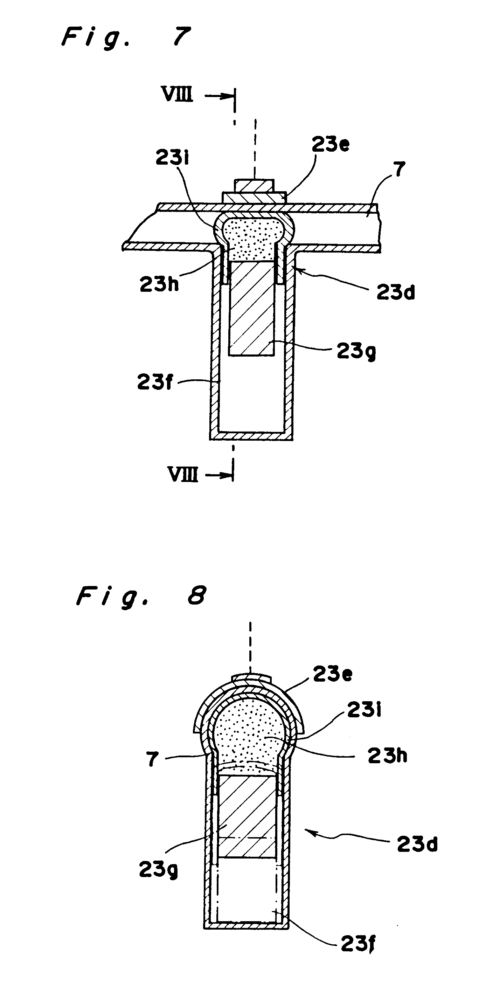

Figs. 7 and 8 show an example of the flow control valves 23 which can be preferably adapted to the above air conditioning system. This electromagnetic valve 23d is incorporated in the heat pipe 7 for thermal medium in liquid phase. The valve 23d has a housing 23f which extend downwardly from the horizontal heat pipe 7. A valve 23j is accommodated in the housing 23f so as to be movable upwardly and downwardly. The valve comprises a piston member or support member 23g and a flexible bag 23i which is secured on the top of the support member 23g and in which magnetic liquid 23h is filled. A semicircular electromagnet 23e is secured on the outer and upper periphery of the heat pipe 7 at a position above the valve 23j.

According to the above valve 23j, when the electromagnet 23e is excited, the magnetic liquid 23h is attracted by the excited electromagnet 23i so that the entire valve 23j moves upwardly from the housing 23f to close the heat pipe 7. The bag 23i, which is flexible, is brought into a tight contact with the inner peripheral surface, i.e. the sealing surface, of the heat pipe 7 so that the heat pipe 7 is sealed tight. As shown in Figs. 7 and 8, since the support member 23g remains in the housing 23f when the valve 23j closes the heat pipe 7, the entire valve 23j is prevented from being moved away from the predetermined position by the flow pressure of the thermal medium. Even if some foreign matter, such as dust, is sandwiched between the bag 23i of the valve 23j and the sealing surface of heat pipe 7, the bag 23i can be easily deformed to fit the outline of the foreign matter so that tight sealing can be effected. When the excitation of the electromagnet 23e is ceased, the valve 23i is released from the electromagnet 23e so that the valve 23i drops into the housing 23f under its gravity, resulting in the opening of the heat pipe 7. When the entire valve 23j is accommodated in the housing 23f, the opened passage of the heat pipe can have the same diameter as that of the heat pipe 7 per se. Accordingly, it is advantageous that the pressure loss at the valve is smaller than that of the normal electromagnetic valve.

## Claims

1. An air conditioning system for buildings which comprises:

    a cold thermal source (10, 4) which is installed at a high place in said building,

    a hot thermal source (11, 5) which is installed at a low place in said building,

    air conditioners (1) which are installed at various heights between said cold and hot thermal sources and each of which has, respectively, a condenser (2) as a heat exchanger for warming air in air-conditioned location, a vaporizer (3) as a heat exchanger for cooling the air in the air-conditioned location and a fan (21) for blowing air into the air-conditioned location through said condenser (2) and vaporizer (3),

a cooling heat pipe of a gravity type (7, 9) by which the vaporizers (3) of said air conditioners (1) is connected with said cold thermal source (10, 4), and in which thermal medium is filled so as to circulate therein,

a warming heat pipe of a gravity type (6, 8) by which the condensers (2) of said air conditioners (1) is connected with said hot thermal source (10, 4) and in which thermal medium is filled so as to circulate therein,

temperature sensors (22) for detecting temperature of the air in the air-conditioned locations,

flow control valves (23, 24, 23a) which are respectively incorporated in the heat pipes (7, 9: 6, 8) at inlets of said vaporizers (3) and at outlets of said condensers (2),

liquid level detection means (7a, 26, 7a') for detecting a predetermined level of the thermal medium in liquid phase in the vaporizer (3), and

controllers (25) which control, respectively, the flow control valves (23, 24 23a) base on detection signals supplied from the temperature sensors (22) and the liquid level detection means (7a, 26, 7a') so that the air in the air-conditioned locations meet a set point.

**2.** An air conditioning system as claimed in claim 1, wherein revolution of the fan (21) is controlled by said controller (25) based on the detection signal from said temperature sensor (22).

**3.** An air conditioning system as claimed in claim 1, wherein said liquid level detection means comprises:

a bypass (7a) which is connected with the cooling heat pipe (7) for thermal medium in liquid phase and with the cooling heat pipe (9) for thermal medium in vapor phase in parallel with said vaporizer (3), and

a liquid level detection switch (26) for detecting level of thermal medium in liquid phase in said bypass (7a).

**4.** An air conditioning system as claimed in claim 3, wherein said liquid level detection switch (26) is mounted on said bypass (7a) so as to detect such a condition that the thermal medium in liquid phase comes substantially over uppermost fin of said vaporizer (3).

**5.** An air conditioning system as claimed in claim 1, wherein said flow control valve (23, 24) comprises:

a housing (23f) downwardly extending from said heat pipe (7) for thermal medium in liquid phase which extends horizontally,

an electromagnet (23e) surrounding a periphery of said heat pipe (7) at a position above said housing (23f), and

a valve (23j) which is accommodated in said housing (23f) so as to be movable upwardly and downwardly in said housing (23f) and which comprises a support member (23g) and a flexible bag (23i) secured on a top of said support member (23g) and accommodating magnetic liquid (23h) therein,

whereby, when said electromagnet (23e) is excited, said valve (23j) is attracted by said electromagnet (23a) so that said bag (23i) is brought into a tight contact with an inner periphery of said heat pipe (7) to close said heat pipe (7).

## Revendications

**1.** Système de climatisation d'air pour immeubles qui comprend :

une source thermique froide (10, 4) qui est installée en un point haut de l'immeuble ;

une source thermique chaude (11, 5) qui est installée en un point bas dans ledit immeuble ;

des climatiseurs (1) qui sont installés à différents niveaux entre lesdites sources thermiques froide et chaude, et dont chacun comprend, respectivement, un condenseur (2), servant d'échangeur de chaleur pour chauffer l'air à l'emplacement climatisé ; un évaporateur (3) servant d'échangeur de chaleur pour refroidir l'air à l'emplacement climatisé, et un ventilateur (21) servant à souffler de l'air dans l'emplacement climatisé, à travers ledit condenseur (2) et ledit évaporateur (3),

un tube de chaleur de refroidissement (7, 9), d'un type à gravité, par lequel les évaporateurs (3) desdits climatiseurs (1) sont reliés à ladite source thermique froide (10, 4) et dans lequel un milieu thermique est introduit de manière à y circuler,

un tube de chaleur de chauffage (6, 8) d'un type à gravité, par lequel les condenseurs (2) desdits climatiseurs sont reliés à ladite source thermique chaude (11, 5) et dans lequel un milieu thermique est introduit de façon à y circuler,

des capteurs de température (22) destinés à détecter la température de l'air dans les locaux climatisés ;

des vannes (23, 24, 23a) de commande de l'écoulement, qui sont respectivement intercalées dans les tubes de chaleur (7, 9 ; 6, 8), aux entrées desdits évaporateurs (3) et aux sorties desdits condenseurs (2),

des moyens (7a, 26, 7a') de détection du niveau de liquide, destinés à détecter un niveau prédéterminé du milieu thermique en phase liquide dans l'évaporateur (3) ; et

des contrôleurs (25) qui commandent respectivement les vannes (23, 24, 23a) de commande de l'écoulement sur la base de signaux de détection émis par les capteurs de température (22) et les moyens (7a, 26, 7a') de détection du niveau de liquide de manière que l'air atteigne un point fixé dans les emplacements climatisés.

2. Système de climatisation selon la revendication 1, dans lequel la rotation du ventilateur (21) est commandée par ledit contrôleur (25) sur la base du signal de détection émis par ledit capteur de température (22).

3. Système de climatisation selon la revendicdion 1, dans lequel les moyens de détection du niveau du liquide comprennent :

une dérivation (7a) qui est reliée au tube de chaleur de refroidissement (7) qui conduit le milieu thermique on phase liquide et au tube de chaleur de refroidissement (9) qui conduit le milieu thermique en phase vapeur, en parallèle avec ledit évaporateur (3), et

un commutateur (26) de détection du niveau de liquide destiné à détecter le niveau du milieu thermique en phase liquide dans ladite dérivation (7a).

4. Système de climatisation selon la revendication 3, dans lequel ledit commutateur (26) de détection du niveau du liquide est monté sur ladite dérivation (7a) de manière à détecter une condition dans laquelle le milieu thermique en phase liquide surmonte sensiblement l'ailette extrême supérieure dudit évaporateur (3).

5. Système de climatisation selon la revendication 1, dans lequel ladite vanne (23, 24) de commande de l'écoulement comprend :

un boîtier (23f) qui s'étend vers le bas à partir du tube de chaleur (7) conduisant le milieu thermique en phase liquide qui s'étend horizontalement,

un électro-aimant (23e) qui entoure la périphérie dudit tube de chaleur (7) en un point situé au-dessus dudit boîtier (23f), et

une vanne (23j) qui est logée dans ledit boîtier (23f) de façon à pouvoir monter et descendre dans ledit boîtier (23f) et qui comprend un élément support (23g) et un soufflet flexible (23i) fixé sur la partie haute dudit élément support (23g) et qui renferme un liquide magnétique (23h),

de sorte que, lorsque ledit électro-aimant (23e) est excité, ladite vanne (23j) est attirée par ledit électro-aimant (23a) de sorte que ledit soufflet (23i) est mis en contact étanche avec la périphérie intérieure dudit tube de chaleur (7) pour fermer ledit tube de chaleur (7).

## Patentansprüche

1. Klimaanlage für Gebäude bestehend aus:
einer Kalttemperaturquelle (10, 4), die im Gebäude an einem hohen Platz installiert ist;
einer Heißtemperaturquelle (11, 5), die im Gebäude an einem niedrigen Platz installiert ist;
Klimageräten (1), die in unterschiedlichen Höhen zwischen den Kalt- und Heißtemperaturquellen installiert sind, von denen jedes Gerät jeweils einen Kondensor (2) als Wärmetauscher zum Erwärmen der Luft in dem klimatisierten Raum, einen Verdampfer (3) als Wärmetauscher zum Kühlen der Luft in dem klimatisierten Raum und einen Ventilator 21 zum Blasen der Luft durch den Kondensor (2) und Verdampfer in den klimatisierten Raum, aufweist.
einem Kälteübertragungsrohrnetz vom Schwerkrafttyp (7, 9), mittels dem die Verdampfer (3) der Klimageräte (1) mit der Kalttemperaturquelle (10, 4), verbunden sind, und in welches das thermisch wirksame Medium eingefüllt ist, um darin zu zirkulieren;
einem Wäremübertragungs-Rohrnetz vom Schwerkrafttyp (6, 8), mittels dem die Kondensoren (2) der Klimageräte (1) mit der Heißtemperaturquelle (11, 5 ), verbunden sind, und in welches das thermisch wirksame Medium eingefüllt ist, um darin zu zirkulieren;
Temperatursensoren (22) zum Detektieren der Temperatur der Luft in den klimatisierten Räumen;
Mengenventilen (23, 24, 23a), die jeweils in das Wärmeübertragungs-Rohrnetz (7, 9; 6, 8) an den Eingängen der Verdampfer (3) und den Ausgängen der Kondensoren (2) eingebaut sind;
Flüssigkeitspegel-Detektoreinrichtungen (7a, 26, 7a') zum Detektieren eines vorbestimmten Pegels des thermisch wirksamen Mediums in der flüssigen Phase in dem Verdampfer (3), und
Reglern (25), die jeweils die Mengenventile (23, 24, 23a) basierend auf den Detektionssignalen, die von den Temperatursensoren (22) und den Flüssigkeitspegel-Detektionseinrichtungen zugeführt werden, regeln, sodaß die Luft in den klimatisierten Räumen einen eingestellten Punkt erreicht.

2. Klimaanlage nach Anspruch 1, wobei die Umdrehung des Ventilators (21) durch den Regler (25) basierend auf dem Detektionssignal vom Temperatursensor (22) geregelt wird.

3. Klimaanlage nach Anspruch 1, wobei die Flüssigkeitspegel-Detektoreinrichtung aufweist: eine Nebenschluß-Leitung (7a) die mit dem Kälteübertragungsrohr (7) für das thermisch wirksame Medium in der flüssigen Phase und mit dem Kälteübertragungsrohr (9) für das thermisch wirksame Medium in der Gasphase parallel zum Verdampfer (3) verbunden ist; und einen Flüssigkeitspegel-Detektorschalter (26) zum Detektieren des Pegels des thermisch wirksamen Mediums in der flüssigen Phase in der Nebenschluß-Leitung (7a).

4. Klimaanlage nach Anspruch 3, wobei der Flüssigkeitspegel-Detektorschalter (26) so an der Nebenschlußleitung (7a) montiert ist, daß ein solcher Zustand detektiert wird, bei dem das thermisch wirksame Medium in der flüssigen Phase im wesentlichen über die oberste Kühlrippe des Verdampfers (3) läuft.

5. Klimaanlage nach Anspruch 1, wobei das Mengenventil (23, 24) aufweist: ein Gehäuse (23f), das sich vom Rohr (7) für das thermisch wirksame Medium in der flüssigen Phase, welche sich horizontal erstreckt, nach unten erstreckt, einen Elektromagnet (23e), der den Umfang dieses Rohres (7) an einer Position oberhalb des Gehäuses (23f) umgibt, und ein Ventil (23j), das in dem Gehäuse (23f) aufgenommen ist, um in diesem Gehäuse (23f) auf und ab verschiebbar zu sein, und das ein Halteelement (23g) und einen flexiblen Sack (23i) aufweist, der an der Oberseite des Halteelements (23g) befestigt ist, und eine magnetische Flüssigkeit (23h) aufnimmt, wobei, wenn der Elektromagnet (23e) erregt wird, dieses Ventil (23j) vom Elektromagnet (23a) angezogen wird, so daß der Sack (23i) in einen Kontakt anliegend am Innenumfang des Rohres (7) gebracht wird, um das Rohr (7) zu schließen.

Fig. 1

Fig. 2

Operation of Valve 24 — Fully opened / Closed

Operation of Valve 23 — Fully opened / Closed

Operation of Fan 21 — Revolution — High / Intermediate / Low

SP

Temperature of returning air

Fig. 3

Opening of Valves

100%

0%

SP

Temperature of returning air

*Fig. 4*

*Fig. 5*

# Fig. 6

EP 0 281 762 B1

3  1  21  22  23
3  1  21  22  23
3  1  21  22  23
3  1  21  22  23
7a'  26  23a  9  7

Fig. 7

Fig. 8